# EUROPEAN PATENT APPLICATION

(11) **EP 4 685 944 A1**
(43) Date of publication of application: **28.01.2026**
(21) Application number: 25169192.9
(22) Date of filing: 08.04.2025
(51) Int. Cl.: H01M 50/184, H01M 50/188, H01M 50/191, H01M 50/193, H01M 50/198, H01M 50/567

(54) **POWER STORAGE DEVICE AND METHOD FOR MANUFACTURING THE POWER STORAGE DEVICE**

(30) Priority: 26.07.2024 JP 2024120789
(71) Applicant: Prime Planet Energy & Solutions, Inc., Chuo-ku, Tokyo 103-0022 (JP)
(72) Inventor: FUJIMURA, Satoshi, Tokyo 103-0022 (JP)
(74) Representative: Kuhnen & Wacker Patent- und Rechtsanwaltsbüro PartG mbB

(57) **Abstract**

A power storage device (1) includes a resin member (50) fixing a terminal member (40) to a case member (25). The resin member (50) includes an intervening portion (54) between the case member and an outward-facing surface (44a) of the terminal member (40), and includes a first resin portion (60, 160) made of first resin material (61) and containing thermoplastic insulating first resin (61a) and first fillers (61b) and a second resin portion (70, 170) made of second resin material (71) and containing thermoplastic insulating second resin (71a) and second fillers (71b), and fixed to the case member (25) and the terminal member (40) by integral molding. The intervening portion (54) includes a first intervening portion (64, 164) of the first resin portion and a second intervening portion (74, 174). An average second orientation direction (H2av) of the second fillers (71b) intersects an average first orientation direction (H1av) of the first fillers (61b) in the first intervening portion (64, 164).

## Description

### BACKGROUND

### Technical field

The disclosure relates to a power storage device in which a terminal member inserted in a through hole of a case member constituting a case is fixed to a through-hole surrounding portion of the case member via a resin member containing fibrous fillers, and a method for manufacturing this power storage device.

### Related Art

As a power storage device, such a battery has been known that positive and negative terminal members are each fixed via resin members to a rectangular plate-shaped case lid, which is a case member constituting a rectangular parallelepiped box-shaped case. Specifically, the positive and negative terminal members are extended from the inside to the outside of the case, through insert holes provided in the case lid. The resin members hermetically join to those terminal members to fix the terminal members to the case lid while the resin members insulate between the through-hole surrounding portions and the terminal members.

In manufacturing such a battery, the resin members may be made by insert molding. That is, while the terminal members are inserted in the insert holes of the case lid, the resin members are insert-molded to fix the terminal members to the case lid via the resin members. One example of a conventional art related thereto is disclosed in Patent Document 1 (see FIGs. 2, 6, and 7 etc. of this publication).

### Patent Documents

Patent Document 1: Japanese unexamined patent application publication No. 2022-079172 (JP 2022-079172A)

### SUMMARY

### Technical Problems

Meanwhile, in some cases for improving the strength of a terminal member or bringing the thermal expansion coefficient of a resin material that forms a resin member close to the thermal expansion coefficient of metal that forms a case member and the terminal member, fibrous fillers, such as glass fibers or carbon fibers, may be added to the resin material.

However, during insert-molding, the fibrous fillers contained in molten resin moves together with the molten resin along a flow of the molten resin. Thus, the fillers tend to be oriented in a flowing direction, that is, oriented so that their longitudinal direction becomes parallel to the flow of the molten resin. In such a molded resin member, therefore, the fillers are apt to be oriented in a specific direction at each place. In addition, the resin material containing fibrous fillers exhibits anisotropy in which the properties of resin material (thermal expansion coefficient, strength, etc.) differ between in the orientation direction of fillers parallel to the longitudinal direction of the fillers and in a direction perpendicular to the orientation direction of the fillers. Thus, if the resin member includes a portion in which fillers are oriented, that portion exhibits the anisotropy of properties. For example, when a power storage device is subjected to a cold/heat cycle test, the anisotropy also occurs in a thermal expansion difference between the resin member and the case member or the terminal member. Depending on the relationship between the direction of stress generated in the resin member and the filler orientation direction, cracks may occur in the resin member near the interface between the resin member and the case member or the terminal member, or the cracks may cause breakage of a seal.

The present disclosure has been made to address the above problems and has a purpose to provide a power storage device configured to prevent or reduce the occurrence of deformation or heat stress occurring in a resin member that fixes a terminal member to a case member, and a method for manufacturing this power storage device.

### Means of Solving the Problems

(1) To achieve the above-mentioned purpose, one aspect of the present disclosure provides a power storage device comprising: a case member made of metal and having an insert hole; a terminal member made of metal and inserted in the insert hole of the case member; and a resin member hermetically joined to the case member and the terminal member while insulating between them, and fixing the terminal member to the case member, characterized in that the resin member includes an intervening portion located between a case inward-facing surface of the case member and an outward-facing surface of the terminal member, which is opposed to the case inward-facing surface, the resin member includes: a first resin portion made of first resin material containing first resin that is thermoplastic and insulating, and fibrous first fillers; a second resin portion made of second resin material containing second resin that is thermoplastic and insulating, and fibrous second fillers, the second resin portion being melted and bonded integrally to the first resin portion, and molded integrally with and fixed to the case member and the terminal member, the intervening portion includes a first intervening portion, which is included in the intervening portion as a part of the first resin portion, and a second intervening portion, which is included in the intervening portion as a part of the second resin portion, and an average second orientation direction of the second fillers in the second intervening portion intersects an average first orientation direction of the first fillers in the first intervening portion.

In the power storage device described above, in the intervening portion of the resin member, the average second orientation direction in the second intervening portion intersects the average first orientation direction in the first intervening portion. This orientation of the second fillers in the average second orientation direction allows the anisotropy of properties that occurs in the second intervening portion of the intervening portion to be mitigated at least in and near an area where the first intervening portion is provided. This can prevent or reduce the occurrence of deformation and heat stress in the resin member due to thermal expansion difference between the intervening portion and the case member or the terminal member.

In this power storage device, the average second orientation direction needs only in an intersecting, not parallel, relationship to the average first orientation direction. This intersecting relationship may be set such that the average second orientation direction is generally perpendicular to the average first orientation direction, concretely, the average second orientation direction intersects the average first orientation direction at 70° to 110°, preferably 80° to 100°. This configuration can effectively reduce the anisotropy in the filler orientation direction in the intervening portion.

As another aspect, the power storage device described in (1) may be configured such that the first intervening portion of the first resin portion includes a plurality of first parallel columnar portions arranged at intervals and extended in a columnar shape in the same first direction, the first parallel columnar portions being made of the first resin material injected to mold the first resin portion and moved ahead in the first direction, and the second intervening portion of the second resin portion includes a plate-shaped portion, which is made of the second resin injected to mold the second resin portion and moved ahead in a second direction parallel to the case inward-facing surface and intersecting with the first direction on the case inward-facing surface side or the terminal outward-facing surface side relative to the first parallel columnar portions of the first resin portion, while the first intervening portion of the first resin portion is placed between the case inward-facing surface of the case member and the terminal outward-facing surface of the terminal member.

(2) Another aspect of the disclosure provides a method for manufacturing a power storage device comprising: a case member made of metal and having an insert hole; a terminal member made of metal and inserted in the insert hole of the case member; and a resin member hermetically joined to the case member and the terminal member while insulating between them, and fixing the terminal member to the case member, wherein the resin member includes an intervening portion located between a case inward-facing surface of the case member and an outward-facing surface of the terminal member, which is opposed to the case inward-facing surface, the resin member includes: a first resin portion made of first resin material containing first resin that is thermoplastic and insulating, and fibrous first fillers; a second resin portion made of second resin material containing second resin that is thermoplastic and insulating, and fibrous second fillers, the second resin portion being melted and bonded integrally to the first resin portion, and molded integrally with and fixed to the case member and the terminal member, the intervening portion includes a first intervening portion, which is included in the intervening portion as a part of the first resin portion, and a second intervening portion, which is included in the intervening portion as a part of the second resin portion, and an average second orientation direction of the second fillers in the second intervening portion intersects an average first orientation direction of the first fillers in the first intervening portion, characterized in that the method comprises: molding the first resin portion; and molding the second resin portion to form the resin member by injecting the second resin material into a die in which the case member, the terminal member, and the first resin portion are disposed in place, in molding the second resin portion, when the injected second resin material flows in the die to form the second intervening portion, an average flow direction of the second resin material flowing through the second intervening portion to be formed intersects the average first orientation direction in the first intervening portion of the first resin portion to mold the second resin portion.

(3) In the method for manufacturing a power storage device described in (2), in molding the first resin portion, the first intervening portion may be molded integrally with a terminal facing portion of the case inward-facing surface of the case member, which is opposed to the outward-facing surface, the outward-facing surface of the terminal member, or each of the terminal facing portion of the case member and the outward-facing surface of the terminal member.

The method for manufacturing a power storage device described in (2) or (3) may be configured such that the first intervening portion of the first resin portion include a plurality of first parallel columnar portions arranged at intervals and each extended in a columnar shape in the same first direction, the first parallel columnar portions being made of the first resin material injected to mold the first resin portion and moved ahead in the first direction, and the second intervening portion of the second resin portion includes a plate-shaped portion, which is made of the second resin portion injected to mold the second resin portion and moved ahead in a second direction parallel to the case inward-facing surface and intersecting with the first direction on the case inward-facing surface side or the terminal outward-facing surface side relative to the first parallel columnar portions of the first resin portion, while the first intervening portion of the first resin portion is placed between the case inward-facing surface of the case member and the terminal outward-facing surface of the terminal member, in molding the first resin portion, to mold the first resin portion by injection of the first resin material, the first resin material is injected to move ahead in the first direction to mold the plurality of first parallel columnar portions in the first intervening portion, in molding the second resin portion, the first intervening portion of the first resin portion is placed in the die between the case inward-facing surface of the case member and the terminal outward-facing surface of the terminal member, and the second resin material is injected into the die to move ahead in the second direction on the case inward-facing surface side or the terminal outward-facing surface side relative to the first parallel columnar portions to form the plate-shaped portion.

### BRIEF DESCRIPTION OF THE DRAWINGS

FIG. 1 is a partial cross-sectional view of a battery in a battery height direction and a battery width direction in an embodiment, and modified examples 1 and 2;
FIG. 2 is an enlarged cross-sectional view of a terminal part of a case lid, taken along a line B-B in FIG. 4, in the embodiment and the modified example 2;
FIG. 3 is an enlarged cross-sectional view of the terminal part of the case lid, taken along a line C-C in FIG. 4, in the embodiment, and the modified examples 1 and 2;
FIG. 4 is a view of the terminal part of the case lid seen from inside in the embodiment, and the modified examples 1 and 2;
FIG. 5 is a flowchart of a method for manufacturing the battery in the embodiment, and the modified examples 1 and 2;
FIG. 6 is a cross-sectional explanatory diagram, taken along a line D-D in FIG. 7, showing how second resin material is injected in a second molding step in the battery manufacturing method in the embodiment, and the modified examples 1 and 2; and
FIG. 7 is an explanatory diagram showing the orientation directions of fillers in a first resin portion and a second resin portion in a resin member of the battery in the embodiment, and the modified examples 1 and 2.

### DETAILED DESCRIPTION OF THE EXEMPLARY EMBODIMENTS

### Embodiment

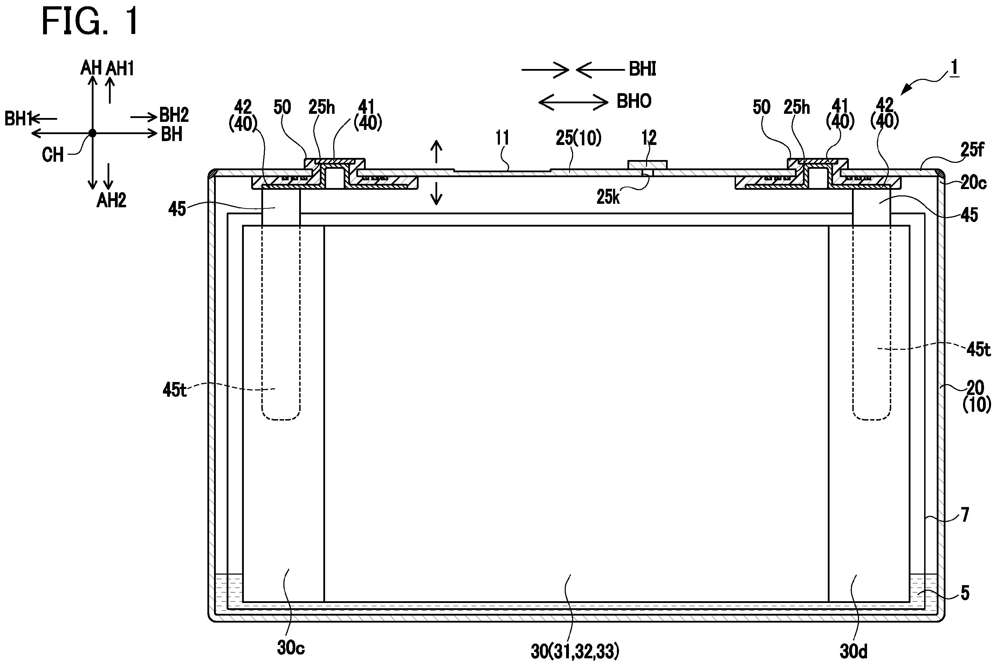

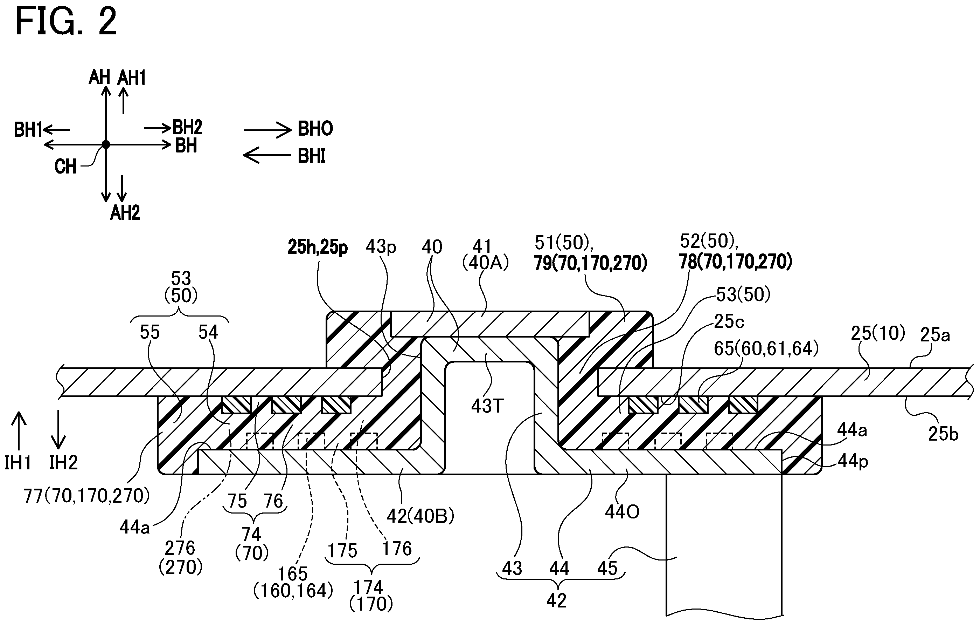

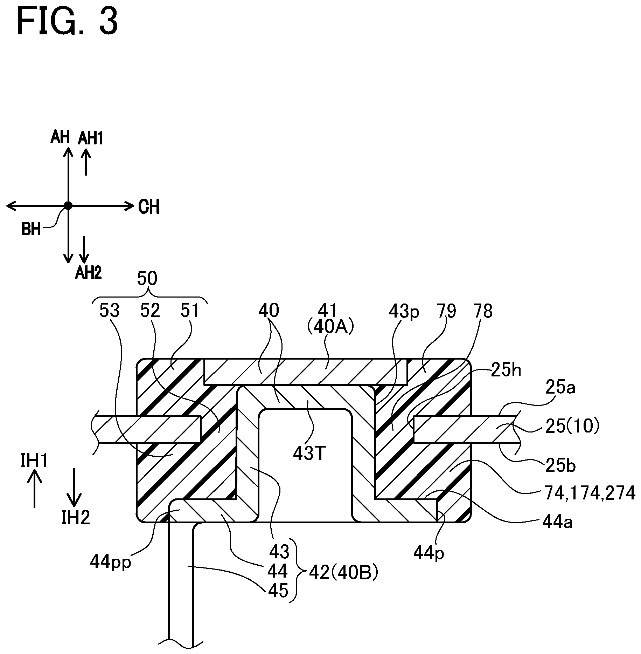

A detailed description of an embodiment of a battery 1 (one example of a power storage device of the disclosure) will now be given referring to the accompanying drawings. FIG. 1 is a partial cross-sectional view of the battery 1. FIG. 2 to 4 show a terminal part of a case lid in enlarged views. The following description is made with the definition that the battery height direction AH, the battery width direction BH, and the battery thickness direction CH of the battery 1 are as indicated by arrows in FIGs. 1 to 4. The battery 1 is a sealed lithium ion secondary battery of a rectangular parallelepiped shape, which is to be mounted in various vehicles, such as a hybrid car, a plug-in hybrid car, an electric car, or a drone. Examples of the "power storage device" include secondary batteries, such as a lithium-ion secondary battery, sodium-ion secondary battery, and a calcium-ion secondary battery, as well as the lithium ion secondary battery, and capacitors, such as a lithium-ion capacitor.

This battery 1 includes a case 10, an electrode body 30 and an electrolyte 5 both housed in the case 10, positive and negative terminal members 40 each fixed to the case 10 via a resin member 50, and others. The electrode body 30 is covered with a pouch-shaped insulation holder 7 made of an insulation film in the case 10.

The case 10 is made of metal (aluminum in the embodiment) in a rectangular parallelepiped box-like shape, and includes a case body 20 of a bottomed rectangular tube shape with a rectangular opening portion 20c, in which the electrode body 30 is housed, and a case lid 25 of a rectangular plate-like shape closing the opening portion 20c of the case body 20. In the embodiment, the case lid 25 corresponds to one example of the case member of the disclosure. The opening portion 20c of the case body 20 and a circumferential edge portion 25f of the case lid 25 are hermetically welded together over their entire circumference, or perimeter. The case lid 25 is provided with a safety valve 11 which will break and open when the internal pressure of the case 10 exceeds a predetermined valve opening pressure. The case lid 25 is further provided with a liquid inlet 25k hermetically sealed with a circular disc-shaped seal member 12 made of aluminum.

The metal forming the case 10 or the case lid 25 may also be duralumin, stainless steel, and others, as well as aluminum. The "case member" may also correspond to the bottomed tube-shaped case body 20 as well as the above-mentioned case lid 25. For a case that includes a tube-shaped case body and a pair of case lids sealing opening portions of the case body at both ends, the case member may also correspond to the case lids and the case body.

The electrode body 30 is a rectangular parallelepiped stacked body, in which a plurality of rectangular positive electrode plates 31 and a plurality of negative electrode plates 32 are alternately stacked in the battery thickness direction CH with rectangular separators 33 made of porous resin films and interposed one between them. In the electrode body 30, furthermore, on the one side BH1 in the battery width direction BH, current collecting foils of the positive electrode plates 31 overlap one another in the battery thickness direction CH, forming a positive current collector part 30c. This positive current collector part 30c is electrically connected to the positive terminal member 40. In the electrode body 30, on the other side BH2 in the battery width direction BH, current collecting foils of the negative electrode plates 32 overlap one another in the battery thickness direction CH, forming a negative current collector part 30d. This negative current collector part 30d is electrically connected to the negative terminal member 40.

The case lid 25 is provided with rectangular insert holes 25h located individually near the edges on the one side BH1 and the other side BH2 in the battery width direction BH. In the insert hole 25h located on the one side BH1, the positive terminal member 40 made of aluminum is inserted, and fixed to the case lid 25 in an insulated state from the case lid 25 via a resin member 50. In the insert hole 25h located on the other side BH2, the negative terminal member 40 made of copper is inserted, and fixed to the case lid 25 in an insulated state from the case lid 25 via another resin member 50. In addition to the above-mentioned aluminum and copper, stainless steel may be used as the metal forming the terminal members 40.

The positive and negative terminal members 40 have the same shape and therefore will be described below collectively. The terminal member 40 is formed of an external terminal member 40A and an internal terminal member 40B welded together in one piece. In the terminal member 40, the external terminal member 40A and a terminal outer part 41 originating therefrom have a rectangular plate-like shape, slightly smaller than the insert hole 25h and extending in the battery width direction BH and the battery thickness direction CH, and are located outside the case 10, concretely, on the upper side AH1 above the case lid 25. The terminal member 40 may be formed by joining multiple components as describe above or by, for example, bending a single component.

In contrast, a terminal inner part 42 originating from the internal terminal member 40B is located mainly on the lower side AH2 below the case lid 25, and extends through the insert hole 25h and is conductively connected to the terminal outer part 41. This terminal inner part 42 includes a flange portion 44 having a rectangular long plate-like shape extending in the battery width direction BH, a protruding portion 43 having a bottomed rectangular tube shape, located at the center of the flange portion 44 and protruding from this flange portion 44 toward the upper side AH1, and an extended portion 45 having a narrow plate-like shape bent generally at a right angle from an extended edge portion 44pp and extends toward the lower side AH2. The rectangular plate-shaped flange portion 44 includes an inside flange portion 44I extending toward the inside BHI in the battery width direction BH and an outside flange portion 44O extending toward the outside BHO in the battery width direction BH. The above-mentioned extended portion 45 extends from the extended edge portion 44pp of the outside flange portion 44O. The flange portion 44 is disposed in parallel to the case lid 25 via the resin member 50. In contrast, the protruding portion 43 extending toward the upper side AH1 from the flange portion 44 is inserted in the insert hole 25h and protrudes toward the upper side AH1 above the case lid 25. A rectangular plate-shaped top surface portion 43T is welded to the external terminal member 40A that is the terminal outer part 41. The extended portion 45 of the positive terminal member 40 is welded, at its leading end portion 45t, to the positive current collector part 30c of the electrode body 30. The positive current collector part 30c is thus electrically conducted to the positive terminal outer part 41. Further, the extended portion 45 of the negative terminal member 40 is welded, at its leading end portion 45t, to the negative current collector part 30d of the electrode body 30. The negative current collector part 30d is thus electrically conducted to the negative terminal outer part 41.

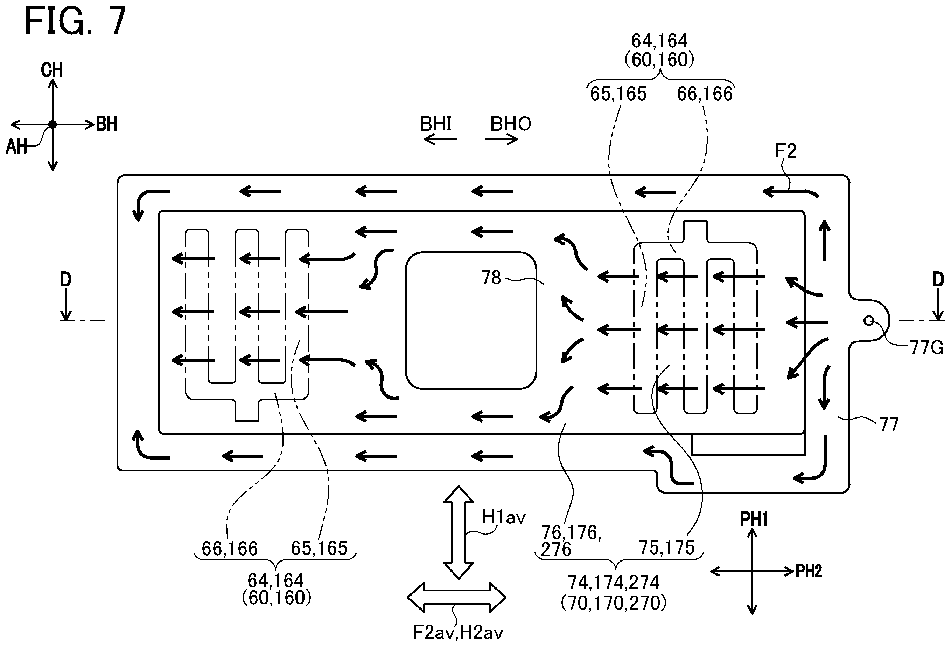

Next, the resin members 50 (also see FIG. 7) will be described. The resin members 50 for a positive electrode and a negative electrode are each hermetically joined to the case lid 25 and the corresponding terminal members 40, fixing the terminal members 40 to the case lid 25, while insulating between the case lid 25 and the terminal members 40. The resin member 50 on the positive electrode side and the resin member 50 on the negative electrode side have the same form and will be described below collectively.

The resin member 50 includes a resin outer portion 51, a resin inner portion 53, and a protrusion surrounding portion 52 connecting the resin outer portion 51 and the resin inner portion 53. The resin outer portion 51 surrounds the terminal outer part 41 and insulates between the terminal outer part 41 and the case lid 25. On the other hand, the resin inner portion 53 is located on the lower side AH2 below the inner surface 25b of the case lid 25, surrounds the flange portion 44 of the terminal inner part 42 and insulates between the case lid 25 and the flange portion 44. The protrusion surrounding portion 52 extends from the resin inner portion 53 and connects to the resin outer portion 51, and surrounds four-side outer peripheral surfaces 43p of the protruding portion 43 to insulate between the outer peripheral surfaces 43p and inner peripheral surfaces 25p of the insert hole 25h of the case lid 25.

Furthermore, the resin inner portion 53 includes an intervening portion 54 and a flange surrounding portion 55. The intervening portion 54 has a generally rectangular plate-like shape, longer in the battery width direction BH than in the battery thickness direction CH. The inner surface 25b of the case lid 25 has a terminal facing portion 25c facing toward the lower side AH2 to be opposed to the flange portion 44 of the terminal member 40. The flange portion 44 of the terminal member 40 has an outward-facing surface 44a facing toward the upper side AH1 to be opposed to the inner surface 25b. The intervening portion 54 is located between the terminal facing portion 25c and the outward-facing surface 44a and insulates between the case lid 25 and the flange portion 44 of the terminal member 40. In contrast, the flange surrounding portion 55 has a rectangular ring-shape located around the intervening portion 54 and surrounds the flange portion 44 of the terminal member 40.

The resin member 50 is formed by two-step molding as will be described later, and includes a first resin portion 60 and a second resin portion 70 that is melted and bonded integrally to the first resin portion 60, and molded integrally with and fixed to the case lid 25 and the terminal member 40. The first resin portion 60 is made of first resin material 61 containing thermoplastic, insulating first resin 61a, fibrous first fillers 61b, and thermoplastic first elastomer 61c. In the embodiment, the first resin 61a is PPS, and the first fillers 61b are glass fibers that are generally 10 µm in diameter and 300 µm in length. The first elastomer 61c is polyurethane elastomer. On the other hand, the second resin portion 70 is made of second resin material 71 containing thermoplastic, insulating second resin 71a, fibrous second fillers 71b, and thermoplastic second elastomer 71c. In the embodiment, the second resin 71a is also PPS as with the first resin 61a, the second fillers 71b are glass fibers as with the first fillers 61b, and the second elastomer 71c is polyurethane elastomer as with the first elastomer 61c. However, the second resin 71a of the second resin material 71 is PPS having a softening point that differs from that of the first resin 61a of the first resin material 61 within ±20°C, specifically, is almost equal to that.

The first resin 61a and the second resin 71a are thermoplastic insulating resin, and may include, for example, PEEK, PTFE, PFA, PE, PP, PET, and PVDF resins, as well as PPS. The first fillers 61b and the second fillers 71b are fibrous fillers, and may include, for example, carbon fiber fillers, ceramic fibers, etc., as well as glass fiber fillers. Furthermore, as described above, the first resin material 61 and the second resin material 71 may contain thermoplastic elastomer and others in addition to the above-mentioned thermoplastic resin and fibrous fillers.

As the first resin material 61 and the second resin material 71, materials that differ in material type and softening point may be used, but materials that are the same in material type and softening point may also be used. When resin materials different in softening point are used, their softening points are set with a difference within ±20°C, and the first resin material 61 is preferably made of the first resin 61a having a softening point higher than that of the second resin 71a. Thus, the first resin portion 60 is less likely to melt and can maintain its shape during molding of the second resin portion 70 by injection of the second resin material 71. As the different resin materials, the first fillers 61b and the second fillers 71b may be set to be different in material type or in filler mixing ratio.

The intervening portion 54 of the resin inner portion 53 of the resin member 50 includes a first intervening portion 64, which is included in the intervening portion 54 as a part of the first resin portion 60 forming a part of the resin member 50, and a second intervening portion 74, which is included in the intervening portion 54 as a part of the second resin portion 70. In other words, the intervening portion 54 is constituted of the first intervening portion 64 made of the first resin material 61 and the second intervening portion 74 made of the second resin material 71. In the embodiment, the entire first resin portion 60 is included in the intervening portion 54, and two first intervening portions 64 are formed. The flange surrounding portion 55 of the resin inner portion 53 of the resin member 50 is entirely constituted of a flange surrounding portion 77 of the second resin portion 70. Similarly, the protrusion surrounding portion 52 and the resin outer portion 51 of the resin member 50 are entirely constituted of a protrusion surrounding portion 78 and a resin outer portion 79 of the second resin portion 70.

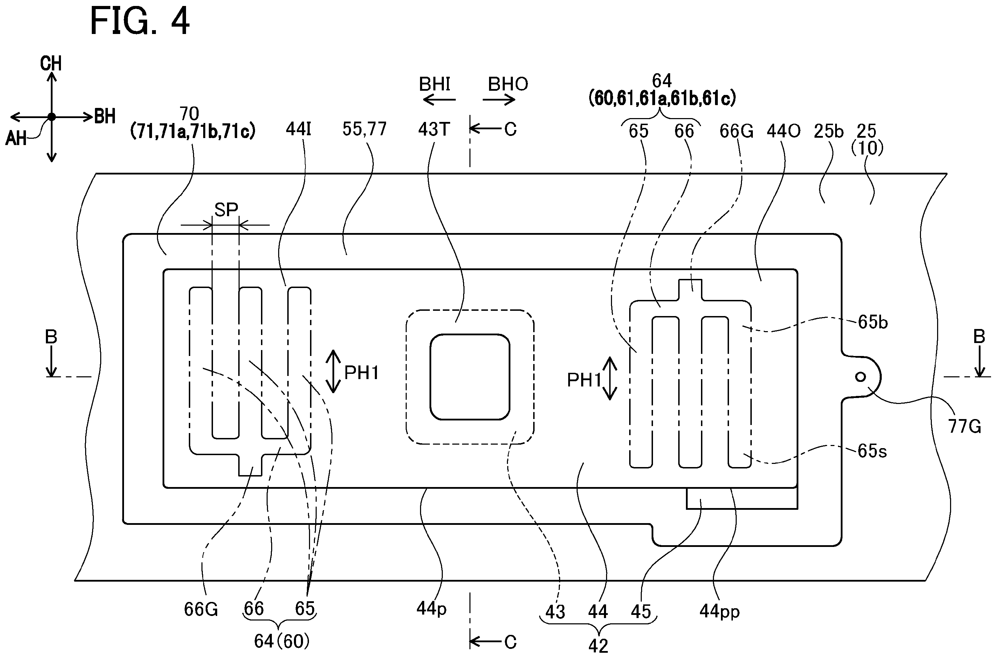

The two first intervening portions 64 have the same shape like the tip of a fork, including a plurality of first parallel columnar portions 65 arranged at intervals SP and each extending in columnar shape in the first direction PH1 (corresponding to the battery thickness direction CH when assembled in the battery 1) and a connecting portion 66 connecting proximal end portions 65b of the of first parallel columnar portions 65 (see FIGs. 4 and 7). In the embodiment, the first intervening portions 64 are integrally bonded to the case lid 25 in the terminal facing portion 25c of the inner surface 25b. Each first intervening portion 64 is formed in a manner that the first resin material 61 injected to mold the first intervening portion 64 (the first resin portion 60) as mentioned later moves ahead in the connecting portion 66 and further in each of the first parallel columnar portions 65 in the first direction PH1. In each of the first parallel columnar portions 65 of the first intervening portion 64, therefore, the first fillers 61b are oriented in the direction almost equal to the first direction PH1. In the embodiment, accordingly, the average first orientation direction H1av that is an average orientation direction of the first resin material 61 is also roughly directed along the first direction PH1.

In contrast, the second intervening portion 74 of the second resin portion 70 forms a part of the intervening portion 54, excluding the first intervening portion 64, and is integrally bonded to the terminal facing portion 25c of the case lid 25 and also to the flange portion 44 of the terminal member 40. This second intervening portion 74 includes intercolumnar portions 75 located between the first parallel columnar portions 65 and further a plate shaped portion 76 located on the outward-facing surface side IH2 (corresponding to the lower side AH2 in the embodiment) relative to the first parallel columnar portions 65 and the intercolumnar portions 75.

For molding this second intervening portion 74, prior to molding the second resin portion 70 as will described later, the first intervening portions 64 are disposed between the terminal facing portion 25c of the case lid 25 and the outward-facing surface 44a of the flange portion 44 of the terminal member 40 so that the first direction PH1 coincides with the battery thickness direction CH. Then, the second resin material 71 is injected to flow, on the lower side AH2 below the first parallel columnar portions 65 of the first resin portion 60, and moves ahead in the second direction PH2 (coincident with the battery width direction BH perpendicular to the battery thickness direction CH in the embodiment) parallel to the inner surface 25b and intersecting with, specifically, perpendicular to, the first direction PH1 to form the intercolumnar portions 75 and the plate-shaped portion 76. Accordingly, in the plate-shaped portion 76 of the second intervening portion 74, the second fillers 71b are oriented in the direction almost equal to the second direction PH2. In the embodiment, therefore, the average second orientation direction H2av that is an average orientation direction of the second fillers 71b in the second intervening portion 74 is also roughly directed along the second direction PH2. It is conceived that the molten second resin material 71 flowing while forming the plate-shaped portion 76 turns its advancing direction to reach the intercolumnar portions 75 of the second intervening portion 74. It is considered that the orientation direction of the second fillers 71b in the intercolumnar portions 75 is less biased in a particular direction and has less influence on the value of the average second orientation direction H2av.

In other words, in the intervening portion 54, the average second orientation direction H2av of the second fillers 71b in the second intervening portion 74 intersects with the average first orientation direction H1av of the first fillers 61b in the first intervening portion 64. In the embodiment, specifically, the average second orientation direction H2av intersects the average first orientation direction H1av at almost right angle, that is, within an angle range of 70° to 110°, further, within an angle range of 80° to 100°. To be more specific, the average second orientation direction H2av intersects the average first orientation direction H1av at an angle of 83°. This orientation of the second fillers 71b in the average second orientation direction H2av allows the anisotropy of properties occurring in the second intervening portion 74 of the intervening portion 54 to be mitigated at least in and near an area where the first intervening portions 64 are provided. This can prevent or reduce the occurrence of deformation and heat stress in the resin member 50 due to the thermal expansion difference between the intervening portion 54 and the case lid 25 or the terminal member 40.

In the battery 1 in the embodiment, especially, each of the first intervening portions 64 includes the first parallel columnar portions 65 made of the first resin material 61 having advanced in the first direction PH1 (the battery thickness direction CH). On the other hand, the second intervening portion 74 of the first resin portion 60 includes the plate-shaped portion 76 made of the second resin material 71 having advanced in the second direction PH2 (the battery width direction BH). The orientation direction of the first fillers 61b in the first parallel columnar portions 65 is almost equal to the first direction PH1 as described above. In contrast, the orientation direction of the second fillers 71b in the plate-shaped portion 76 is almost equal to the second direction PH2, intersecting the first direction PH1, further roughly perpendicular to the first direction PH1. In this battery 1, consequently, the first parallel columnar portions 65 in the intervening portion 54 of the resin member 50 can effectively mitigate the anisotropy of the orientation direction of the second fillers 71b in the plate-shaped portion 76, so that deformation and thermal stress are less likely to occur in the resin member 50.

A method for obtaining the average first orientation direction H1av of the first fillers 61b in the first intervening portion 64 of the resin member 50 and the average second orientation direction H2av of the second fillers 71b in the second intervening portion 74 of the resin member 50 may include the following methods. Specifically, the resin member 50 from which the case lid 25 and the terminal members 40 are removed by dissolving or other techniques is subjected to tomography using an X-ray micro CT (in the embodiment, TDM3000H-FP produced by Yamato Scientific Co., Ltd.; not shown in the figure) and a three-dimensional image of the resin member 50 is reconstructed. In addition, the resin member 50 is virtually divided into a number of minute rectangular prismatic shapes (in this embodiment, 300 µm wide x 200 µm thick x 100 µm high; not shown in the figure) by means of three kinds of segmented cross sections orthogonal to each other, that is, three segmented planes orthogonal to the X, Y and Z axes, respectively, and the average orientation direction of fillers in each rectangular prismatic portion is obtained. Then, the rectangular prismatic portions included in the intervening portion 54 are classified into rectangular prismatic portions belonging to the first intervening portion 64 and rectangular prismatic portions belonging to the second intervening portion 74. Subsequently, the average of the average orientation directions of the rectangular prismatic portions belonging to the first intervening portion 64 is calculated and assumed as the average first orientation direction H1av. Further, the average of the average orientation directions of the rectangular prismatic portions belonging to the second intervening portion 74 is calculated and assumed as the average second orientation direction H2av.

The tomography of the resin member 50 using the X-ray micro CT is performed by disposing this device so that the X axis of the device coincides with the battery width direction BH of the resin member 50, the Y axis of the same coincides with the battery thickness direction CH of the resin member 50, and the Z axis of the same coincides with the battery height direction AH of the resin member 50. The average orientation direction of fillers in each rectangular prismatic portion forming the resin member 50 is obtained by use of a software attached to the X-ray micro CT.

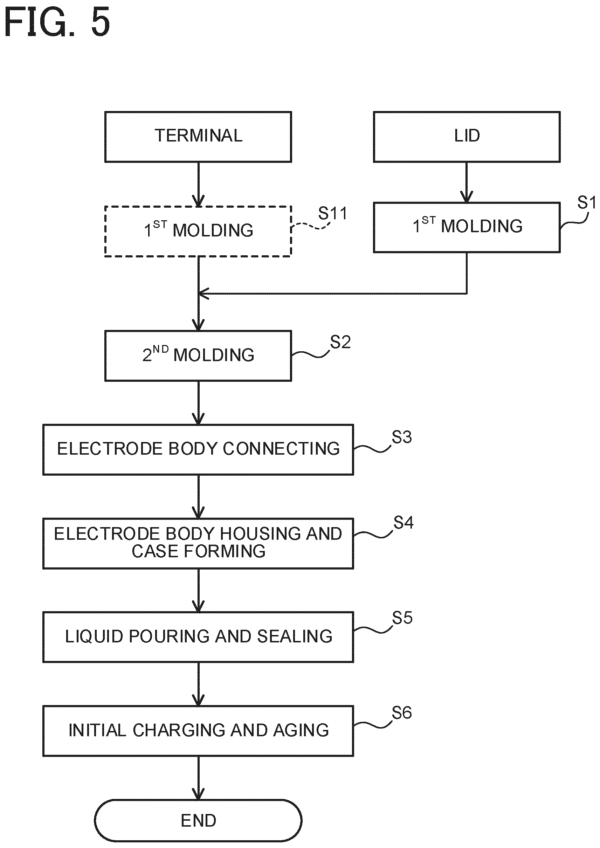

Next, a method for manufacturing the foregoing battery 1 will be described below, referring to FIGs. 5 to 7. The case lid 25 and the positive and negative terminal members 40 in pair are prepared in advance. Each of the positive and negative terminal members 40 is formed of the internal terminal member 40B with the protruding portion 43 protruding from the flange portion 44 and the extended portion 45 bending respect to the flange portion 44, and the external terminal member 40A of a flat plate shape., and these terminal members 40A and 40B are welded to each other.

In a lid-side first molding step S1, indicated with a solid line in FIG. 5, which is one example of a first molding step, a pair of the first resin portions 60 (first intervening portions 64) are respectively integrally molded using the first resin material 61 on the terminal facing portions 25c near the paired insert holes 25h in the inner surface 25b of the case lid 25. Specifically, in a die not shown, the paired first resin portions 60 are integrally molded on the case lid 25 by injection molding. At that time, the first resin material 61 in a molten state is injected into the die through a first gate part 66G at the center of each of the connecting portions 66. The first resin material 61 advances in the first direction PH1 from a proximal end portion 65b to a distal end portion 65s of each of a plurality of (three in the embodiment) first parallel columnar portions 65, forming the first parallel columnar portions 65. As described above, in each of the first parallel columnar portions 65 of the first intervening portion 64, the orientation direction of the first fillers 61b is directed approximately along the first direction PH1. Accordingly, in the embodiment, the average first orientation direction H1av in the first intervening portions 64 including the connecting portions 66 is also directed approximately along the first direction PH1.

In a second molding step S2, the terminal outer parts 41 of the positive and negative terminal members 40 are each inserted in one of paired insert holes 25h of the case lid 25 from the side of the inner surface 25b (i.e., from the lower side AH2) so as to protrude toward the upper side AH1 relative to the outer surface 25a. Then, the paired second resin portions 70 are injection-molded on the case lid 25 and the paired positive and negative terminal members 40, which are assembled together, to form the resin members 50. Thus, with the resin members 50 hermetically joined to the case lid 25 and the positive and negative terminal members 40 while insulating between them, the positive and negative terminal members 40 are integrally fixed to the case lid 25.

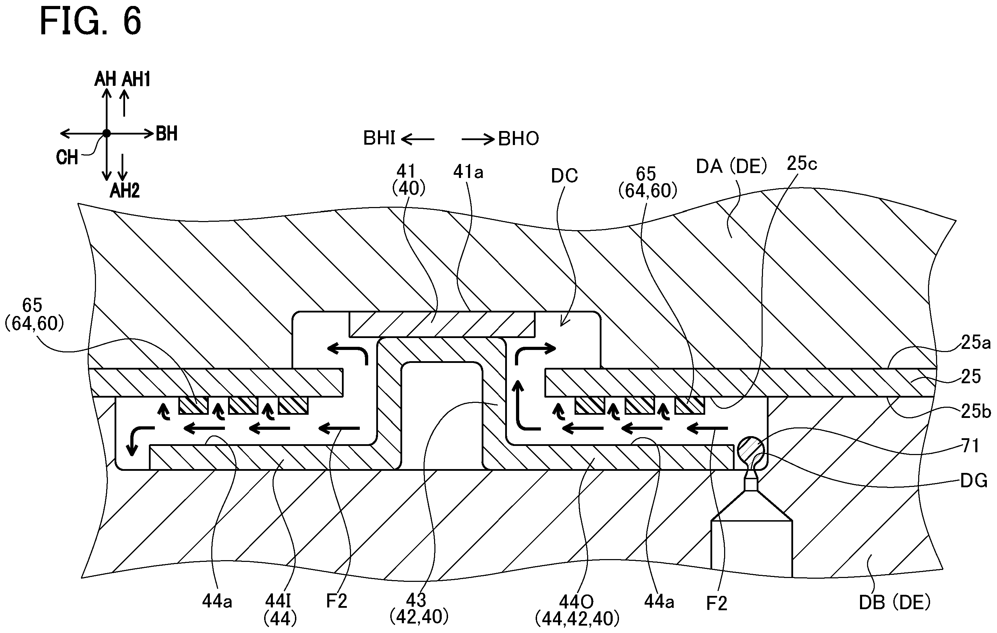

In this second molding step S2, a die DE including an upper die DA and a lower die DB is used (see FIG. 6). The upper die DA is set in contact with the outer surface 25a of the case lid 25 and outer surfaces 41a of the terminal outer parts 41 of the terminal members 40. The lower die DB is set in contact with the inner surface 25b of the case lid 25 and the flange portions 44 of the terminal inner parts 42 of the terminal member 40. In this way, while the case lid 25, the paired terminal members 40, and the first resin portions 60 are disposed in the die DE, the molten second resin material 71 is injected from a second gate DG via a second gate part 77G, molding a pair of the second resin portions 70, so that a pair of resin members 50 are obtained. As easily understood from FIGs. 4 and 7, in the die DE, the first direction PH1 in which the first parallel columnar portions 65 of the first resin portion 60 extend is coincident with a direction perpendicular to the drawing sheet of FIG. 6, that is, the battery thickness direction CH.

In the second molding step S2, the die DE, the case lid 25, the paired first resin portions 60, and the paired terminal members 40 form a pair of cavities DC for molding a pair of second resin portions 70. In the embodiment as described above, the first resin portions 60 are each molded integral with the case lid 25 and located on the upper side AH1 in FIG. 6. Therefore, the molten second resin material 71 injected into each cavity DC from the second gate DG flows as flows, or streams, F2 indicated by arrows in FIG. 7 and molds each second resin portion 70. In other words, between the terminal facing portion 25c of the inner surface 25b of the case lid 25 and the outward-facing surface 44a of the flange portion 44 of the terminal member 40, the molten second resin material 71 flows almost from right to left in FIG. 6 along the outward-facing surface 44a of the flange portion 44, between the first resin portion 60 and the flange portion 44, forming the plate-shaped portion 76. That is, the second resin material 71 flows toward the inside BHI in the battery width direction BH to form the plate-shaped portion 76. Between the first parallel columnar portions 65, the molten second resin material 71 flows toward the upper side AH1 so as to wrap around the first parallel columnar portions 65, forming the intercolumnar portions 75 protruding from the plate-shaped portion 76 toward the upper side AH1.

Accordingly, as described above, in the plate-shaped portion 76 along the outward-facing surface 44a, as part of the second intervening portion 74 of the second resin portion 70, the orientation direction of the second fillers 71b is directed approximately along the second direction PH2 (the battery width direction BH) and is almost perpendicular to the first direction PH1 (the battery thickness direction CH) which is the orientation direction of the first fillers 61b in the first parallel columnar portions 65. In the embodiment, accordingly, the average second orientation direction H2av in the second intervening portion 74 including the intercolumnar portions 75 is also directed approximately along the second direction PH2 (the battery width direction BH) and is almost perpendicular to the average first orientation direction H1av in the first intervening portions 64.

In an electrode-body connecting step S3 (see FIG. 5), subsequently, the extended portion 45 of the positive terminal member 40 is ultrasonically welded to the positive current collector part 30c of the electrode body 30 separately prepared. Similarly, the extended portion 45 of the negative terminal member 40 is ultrasonically welded to the negative current collector part 30d of the electrode body 30. Then, this electrode body 30 is enclosed with a bottomed pouch-shaped insulation holder 7.

In an electrode-body housing and case forming step S4, the electrode body 30 covered with the foregoing insulation holder 7 is inserted in the bottomed, rectangular box-shaped case body 20 separately prepared, and then the opening portion 20c of the case body 20 is closed with the case lid 25. Then, the opening portion 20c of the case body 20 and the circumferential edge portion 25f of the case lid 25 are hermetically joined to each other by laser welding over their entire circumference. Thus, the case 10 in which the electrode body 30 is housed is completed.

In a liquid pouring and sealing step S5, the electrolyte 5 is poured into the case 10 through the liquid inlet 25k so that the electrode body 30 is internally impregnated with the electrolyte 5. Thereafter, the liquid inlet 25k is covered with the seal member 12 from above and further the seal member 12 is hermetically joined to the case lid 25 by laser welding.

In an initial charging and aging step S6, this battery 1 is connected to a charge device (not shown) and subjected to initial charge. The initially charged battery 1 is left standing at a high temperature for a predetermined time for aging. The battery 1 is thus completed.

In the method for manufacturing the battery 1 as described above, the second resin material 71 is injected into the die DE to mold the second resin portions 70 in the second molding step S2. In forming the second intervening portion 74 of each second resin portion 70, the average flow direction F2av of the flows F2 of the injected second resin material 71 flowing in an area, or cavity, in the die DE for the second intervening portion 74 intersects the average first orientation direction H1av in the first resin portion 60 (the first intervening portion 64). This makes it easy to form the resin member 50 in which the average second orientation direction H2av in the second intervening portion 74 intersects the average first orientation direction H1av in the first intervening portion 64.

In this manufacturing method, additionally, the first resin portions 60 are molded integrally with the terminal facing portion 25c of the inner surface 25b of the case lid 25, not as independent components. Therefore, during injection of the second resin material 71 in the second molding step S2, the first resin portions 60 do not move. It is also not necessary to set the first resin portions 60 in the die DE separately from the case lid 25 and the terminal members 40. The first resin portions 60 can be easily and properly positioned in the die DE as long as the case lid 25 and the terminal members 40 are set in place. In this state, the second resin portions 70 are molded, and the resin members 50 can be obtained.

In the foregoing manufacturing method, in the lid-side first molding step S1, the first resin material 61 is injected and advanced in the first direction PH1 to mold the first parallel columnar portions 65 of each first resin portion 60. In addition, in the second molding step S2, in the die DE, the first intervening portions 64 of the first resin portions 60 are placed between the terminal facing portion 25c of the case lid 25 and the outward-facing surface 44a of the flange portion 44 of the terminal member 40, and then the second resin material 71 is injected to mold the second resin portions 70. Accordingly, in the intervening portions 54 of the resin members 50, the first parallel columnar portions 65 of each first resin portion 60 effectively mitigate the anisotropy of the orientation direction of the second fillers 71b in the plate-shaped portions 76, making it possible to easily manufacture the battery 1 capable of preventing or reducing the occurrence of deformation and thermal stress in the resin members 50.

### Modified Examples 1 and 2

In the above-described embodiment, the first intervening portions 64 of the first resin portions 60 are provided integrally with the terminal facing portion 25c of the inner surface 25b of the case lid 25 as indicated by the solid lines in FIG. 2. In a modified example 1, alternatively, first intervening portions 164 of first resin portions 160 with the same shape as the first intervening portions 64 in the embodiment are provided integrally with the outward-facing surface 44a of the flange portion 44 of the terminal member 40 as indicated by broken lines in FIG. 2. Accordingly, a second intervening portion 174 included in the intervening portion 54, as part of a second resin portion 170 forming the resin member 50, may be constituted of a plate-shaped portion 176 extending along the inner surface 25b of the case lid 25 and located on the inner surface side IH1 (coinciding with the upper side AH1 in the embodiment) relative to a first intervening portion 164 (first parallel columnar portions 165 and a connecting portion 166) and intercolumnar portions 175 extending from this plate-shaped portion 176 toward the outward-facing surface side IH2 (the lower side AH2), between the first parallel columnar portions 165. Each first intervening portion 164 also includes three first parallel columnar portions 165 extending in the first direction PH1.

In a modified example 2, moreover, the first intervening portions 64 of the first resin portions 60 are provided integrally with the terminal facing portion 25c of the inner surface 25b of the case lid 25 and further the first intervening portion s 164 of the first resin portions 160 indicated by the broken lines in FIG. 2 are provided integrally with the outward-facing surface 44a of the flange portion 44 of the terminal member 40. Accordingly, a second intervening portion 274 included in the intervening portion 54, as part of a second resin portion 270 forming the resin member 50, may be constituted of a plate-shaped portion 276 located between the two first intervening portions 64 and 164, intercolumnar portions 75 extending toward the upper side AH1 between the first parallel columnar portions 65, and intercolumnar portions 175 extending toward the lower side AH2 between the first parallel columnar portions 165.

In the modified example 1, instead of the lid-side first molding step S1, a terminal-side first molding step S11 is performed, as indicated by a broken line in FIG. 5, to provide the first intervening portions 164 on the outward-facing surfaces 44a of the flange portions 44 of the paired terminal members 40. In the modified example 2, the lid-side first molding step S1 is performed to provide the first intervening portions 64 integrally with the terminal facing portion 25c of the inner surface 25b of the case lid 25 and additionally the terminal-side first molding step S11 is performed to provide the first intervening portions 164 on the outward-facing surfaces 44a.

The disclosure is described in the foregoing embodiment and modified examples 1 and 2, but is not limited thereto. The disclosure may be embodied in other specific forms without departing from the essential characteristics thereof. For example, in the embodiment and others, as understood from FIGs. 2, 4, and 7, the first intervening portion 64 occupies the entity of the first resin portion 60. However, the first resin portion may also include a portion other than the first intervening portion.

In the embodiment and modified examples 1 and 2, the first intervening portion 64 is bonded integrally to the case lid 25 in advance or the first intervening portion 164 is molded integrally with the flange portion 44 of the terminal member 40 in advance. However, the first intervening portion of the first resin portion may not be molded integrally with the case lid and the terminal member in advance and instead the first resin portion may be formed in advance as a separate component including the first intervening portion. Then, the first intervening portion of the separate first resin portion may be placed between the case inward-facing surface of the case member and the terminal outward-facing surface, and the second resin material 71 is injected to mold the resin member.

### Reference Signs List

- 1: Battery (Power storage device)
- 10: Case
- 25: Case lid (Case member)
- 25h: Insert hole
- 25b: Inner surface (of case lid) (Case inward-facing surface)
- 25c: Terminal facing portion
- 40: Terminal member
- 50: Resin member
- 51: Resin outer portion
- 52: Protrusion surrounding portion
- 53: Resin inner portion
- 54: Intervening portion
- 55: Flange surrounding portion
- 60, 160: First resin portion
- 61: First resin material
- 61a: First resin
- 61b: First filler
- H1av: Average first orientation direction
- 64, 164: First intervening portion
- 65, 165: parallel columnar portion
- SP: Interval
- 65b: Proximal end portion
- 65s: Distal end portion
- 66, 166: Connecting portion
- 66G: First gate part
- 70, 170, 270: Second resin portion
- 71: Second resin material
- F2: Flow (of molten second resin material)
- F2av: Average flow direction
- 71a: Second resin
- 71b: Second filler
- H2av: Average second orientation direction
- 74, 174, 274: Second intervening portion
- 75, 175: Intercolumnar portion
- 76, 176,276: Plate-shaped portion
- 77: Flange surrounding portion
- 78: Protrusion surrounding portion
- 79: Resin outer portion
- PH1: First direction
- PH2: Second direction
- IH1: Inner surface side (Case inward-facing surface side)
- IH2: Outward-facing surface side (Terminal outward-facing surface side)
- DE: Die
- S1: Lid-side first molding step (First molding step)
- S11: Terminal-side first molding step (First molding step)
- S2: Second molding step

## Claims

1. A power storage device (1) comprising:
a case member (25) made of metal and having an insert hole (25h);
a terminal member (40) made of metal and inserted in the insert hole (25h) of the case member (25); and
a resin member (50) hermetically joined to the case member (25) and the terminal member (40) while insulating between them, and fixing the terminal member (40) to the case member (25),
**characterized in that**
the resin member (50) includes an intervening portion (54) located between a case inward-facing surface (25b) of the case member (25) and an outward-facing surface (44a) of the terminal member (40), which is opposed to the case inward-facing surface (25b),
the resin member (50) includes:
a first resin portion (60, 160) made of first resin material (61) containing first resin (61a) that is thermoplastic and insulating, and fibrous first fillers (61b);
a second resin portion (70,170,270) made of second resin material (71) containing second resin (71a) that is thermoplastic and insulating, and fibrous second fillers (71b), the second resin portion (70,170,270) being melted and bonded integrally to the first resin portion (60, 160), and molded integrally with and fixed to the case member (25) and the terminal member (40),
the intervening portion (54) includes a first intervening portion (64,164), which is included in the intervening portion (54) as a part of the first resin portion (60, 160), and a second intervening portion (74,174), which is included in the intervening portion (54) as a part of the second resin portion (70,170,270), and
an average second orientation direction (H2av) of the second fillers (71b) in the second intervening portion (74, 174) intersects an average first orientation direction (H1av) of the first fillers (61b) in the first intervening portion (64, 164).

2. The power storage device (1), wherein
the first intervening portion (64, 164) of the first resin portion (60, 160) includes a plurality of first parallel columnar portions (65, 165) arranged at intervals and each extended in a columnar shape in a first direction (PH1), the first parallel columnar portions (65, 165) being made of the first resin material (61) injected to mold the first resin portion (60, 160) and moved ahead in the first direction (PH1), and
the second intervening portion (74, 174) of the second resin portion (70, 170, 270) includes a plate-shaped portion (76, 176), which is made of the second resin (71) injected to mold the second resin portion (74, 174) and moved ahead in a second direction (PH2) parallel to the case inward-facing surface (25b) and intersecting with the first direction (PH1) on the case inward-facing surface (25b) side or the terminal outward-facing surface (44a) side relative to the first parallel columnar portions (65, 165) of the first resin portion (60, 160), while the first intervening portion (64, 164) of the first resin portion (60, 160) is placed between the case inward-facing surface (25b) of the case member (25) and the terminal outward-facing surface (44a) of the terminal member (40).

3. A method for manufacturing a power storage device comprising:
a case member (25) made of metal and having an insert hole (25h);
a terminal member (40) made of metal and inserted in the insert hole (25h) of the case member (25); and
a resin member (50) hermetically joined to the case member (25) and the terminal member (40) while insulating between them, and fixing the terminal member (40) to the case member (25),
wherein the resin member (50) includes an intervening portion (54) located between a case inward-facing surface (25b) of the case member (25) and an outward-facing surface (44a) of the terminal member (40), which is opposed to the case inward-facing surface (25b),
the resin member (50) includes:
a first resin portion (60, 160) made of first resin material (61) containing first resin (61a) that is thermoplastic and insulating, and fibrous first fillers (61b);
a second resin portion (70,170,270) made of second resin material (71) containing second resin (71a) that is thermoplastic and insulating, and fibrous second fillers (71b), the second resin portion (70,170,270) being melted and bonded integrally to the first resin portion (60, 160), and molded integrally with and fixed to the case member (25) and the terminal member (40),
the intervening portion (54) includes a first intervening portion (64,164), which is included in the intervening portion (54) as a part of the first resin portion (60, 160), and a second intervening portion (74,174), which is included in the intervening portion (54) as a part of the second resin portion (70,170,270), and
an average second orientation direction (H2av) of the second fillers (71b) in the second intervening portion (74,174) intersects an average first orientation direction (H1av) of the first fillers (61b) in the first intervening portion (64,164),
**characterized in that**
the method comprises:
molding (S1, S11) the first resin portion (60,160); and
molding (S2) the second resin portion (70,170,270) to form the resin member (50) by injecting the second resin material (71) into a die (DE) in which the case member (25), the terminal member (40), and the first resin portion (60,160) are disposed in place,
in molding (S2) the second resin portion (70,170,270), when the injected second resin material (71) flows in the die (DE) to form the second intervening portion (74,174), an average flow direction (F2av) of the second resin material (71) flowing through the second intervening portion (74,174) to be formed intersects the average first orientation direction (H1av) in the first intervening portion (64,164) of the first resin portion (60,160) to mold the second resin portion (70,170,270).

4. The method for manufacturing a power storage device according to claim 3, wherein
in molding (S1,S11) the first resin portion (60,160),
the first intervening portion (64,164) is molded integrally with a terminal facing portion (25c) of the case inward-facing surface (25b) of the case member (25), which is opposed to the outward-facing surface (44a), the outward-facing surface (44a) of the terminal member (40), or each of the terminal facing portion (25c) of the case member (25) and the outward-facing surface (44a) of the terminal member (40).

5. The method for manufacturing a power storage device (1) according to claim 3 or 4, wherein
the first intervening portion (64, 164) of the first resin portion (60, 160) include a plurality of first parallel columnar portions (65, 165) arranged at intervals and each extended in a columnar shape in a first direction (PH1), the first parallel columnar portions (65, 165) being made of the first resin material (61) injected to mold the first resin portion (60, 160) and moved ahead in the first direction (PH1), and
the second intervening portion (74, 174) of the second resin portion (70, 170, 270) includes a plate-shaped portion (76, 176), which is made of the second resin (71) injected to mold the second resin portion (74, 174) and moved ahead in a second direction (PH2) parallel to the case inward-facing surface (25b) and intersecting with the first direction (PH1) on the case inward-facing surface (25b) side or the terminal outward-facing surface (44a) side relative to the first parallel columnar portions (65, 165) of the first resin portion (60, 160), while the first intervening portion (64, 164) of the first resin portion (60, 160) is placed between the case inward-facing surface (25b) of the case member (25) and the terminal outward-facing surface (44a) of the terminal member (40),
in molding (S1, S11) the first resin portion (60,160), to mold the first resin portion (60, 160) by injection of the first resin material (61), the first resin material (61) is injected to move ahead in the first direction (PH1) to mold the plurality of first parallel columnar portions (65, 165) in the first intervening portion (64, 164),
in molding the second resin portion (70,170,270), the first intervening portion (64, 164) of the first resin portion (60, 160) is placed in the die (DE) between the case inward-facing surface (25b) of the case member (25) and the terminal outward-facing surface (44a) of the terminal member (40), and the second resin material (71) is injected into the die (DE) to move ahead in the second direction (PH2) on the case inward-facing surface (25b) side or the terminal outward-facing surface (44a) side relative to the first parallel columnar portions (65, 165) to form the plate-shaped portion (76, 176).
